# EUROPÄISCHE PATENTSCHRIFT

(11) **EP 1 865 298 B1**
(45) Veröffentlichungstag und Bekanntmachung des Hinweises auf die Patenterteilung: **27.01.2010**
(21) Anmeldenummer: 07003370.9
(22) Anmeldetag: 17.02.2007
(51) Int. Cl.: G01J 5/04

(54) **Verfahren zur Erfassung von Wärmestrahlung in thermischen Produktionsprozessen**
Method for recording thermal radiation in thermal production processes
Procédé de détection d'un rayonnement thermique dans des processus de production thermiques

(30) Priorität: 31.05.2006 DE 102006025286
(43) Veröffentlichungstag der Anmeldung: 12.12.2007
(73) Patentinhaber: ORGLMEISTER INDUSTRIEMESSTECHNIK, 65396 Walluf (DE)
(72) Erfinder: Orglmeister, Albert, 65396 Walluf (DE)
(74) Vertreter: Aue, Hans-Peter

(56) Entgegenhaltungen:
- EP-A- 0 836 084
- DE-A1- 3 614 277
- DE-U1-202004 013 064

## Beschreibung

Die Erfindung bezieht sich auf ein Verfahren zur Erfassung von großflächigen Thermobildern mit Thermokameras auf einem Monitor, insbesondere zur Temperaturmessung in thermischen Produktionsprozessen mit einer in einem schwenkbeweglichen Gehäuse befindlichen thermischen Kamera und einer Lüftungseinrichtung.

Einrichtungen zur Erfassung von Wärmestrahlung, wie Pyrometer, Infrarotzeilenkameras und Infrarotkameras, die auf Grund einer Rotations- oder Translationsbewegung ein mehrfaches ihrer strahlungsempfindlichen Sensorfläche erfassen können, werden als thermische Sensoren in zahlreichen Industriezweigen eingesetzt, um kontinuierlich thermische Prozesse zu überwachen. Mit der Infrarottechnologie lassen sich auf einfache Weise thermische Informationen zu Produktqualität oder Effizienz der Produktion erfassen, die mit herkömmlichen Methoden, wie Thermoelementen oder Kameras, nicht oder nur unzureichend erfasst werden können.

Zur thermischen Überwachung im Rahmen des vorbeugenden Brandschutzes z.B. eines Müllbunkers mit geometrischen Abmaßen bis zu 80 m Länge, 30 m Breite und 30 m Tiefe, liefert eine feststehende Thermokamera, deren Optik so ausgelegt ist, dass mit dieser der ganze Müllbunker zeitgleich erfasst werden kann, eine geometrisch so geringe Auflösung, dass beispielsweise Brände am Rand des Bunkers eine Mindestgröße von 3 m x 3 m haben müsste, um als Brand detektiert werden zu können. Die Vorschriften des Brandschutzes setzen jedoch eine Auflösungsgröße von 0,4 m x 0,4 m voraus. Daher wäre eine starr auf den Müllbunker ausgerichtete Infrarotkamera für die Branddetektion nicht verwendbar.

In der Regel werden herkömmliche Verfahreinrichtungen für normale Videokameras verwendet, die mit einer Thermokamera bestückt ist. Aufgrund der Antriebstechnik gibt es bei dieser Lösung nur die Möglichkeit, ein einziges Thermobild aufzuzeichnen. Aufgrund der Antriebstechnik, die unabhängig von der Thermokamera nur Positionen anfährt, gibt es nur die Möglichkeit, die geometrische Fläche des Müllbunkers in kleine einzelne Thermobilder zu zerlegen. Dies geschieht, indem mit der herkömmlichen Verfahreinrichtung nacheinander Bildabschnitt für Bildabschnitt angefahren wird, um somit sukzessive das Gesamtthermobild aus nebeneinander liegenden Einzelbildern aufzubauen. Nachteilig ist hier die sprungweise Aneinanderreihung des Infrarotbildes zu einem Gesamtbild. Eine schnelle Thermobilddarstellung in Echtzeit, etwa 50 Bilder/sec, ist mit diesem Verfahren nicht möglich. Daher ist eine örtlich zugeordnete direkte Beobachtung bzw. eine direkte Erkennung einer aufkommenden Brandstelle nicht möglich. Diese äußert sich nämlich durch eine rasche örtliche Veränderung aufgrund aufsteigender Hitze, vor allem dann, wenn es sich um einen Schwelbrand handelt, der nicht direkt an der Oberfläche sondern in einer tieferen Ebene des Müllberges liegt und daher nur durch seine Bewegung identifiziert werden kann.

Situationsbedingt sind die Infrarot-Kameras bei der Überwachung thermischer Prozesse dadurch meist einer großen Temperaturbelastung ausgesetzt. Insbesondere dann, wenn eine größere Sensorfläche als die der Kamera erfasst werden soll, muss die Sensorik bewegt werden. Üblich ist es dabei, einen Sensor, z. B. eine Thermokamera, mit einer Scaneinrichtung zu verbinden und hierüber die Position der Thermokamera zu steuern. Da die Thermokamera aufgrund ihrer Eigenschaften normalerweise eine Umgebungstemperatur größer 60° C nicht überschreiten darf, wird diese zumindest durch Luft gekühlt, da die Umgebungstemperatur oft sehr hoch ist.

Beispielsweise bei der Papierproduktion, muss aus Qualitätsgründen das Temperaturprofil einer Glättwalze auf Gleichmäßigkeit hin überwacht werden. Dazu wird die Walze abgescannt und während des Scannensvorgangs der Walze ein Temperaturprofil aufgezeichnet. Hierbei herrschen extreme Wärme, Feuchtigkeit und Schmutz. Irgendwann verschmutzen die Leitungen und Kabel und alle zum Kamerasystem gehörigen beweglichen Teile, so dass sich die Kamera nicht mehr bewegen kann oder durch Überhitzung beschädigt oder gar zerstört wird.

Weiterhin soll mit einer Luftspülung sichergestellt werden, dass äußere Einflüsse wie Staub oder produktionsbedingte Verschmutzungen verhindert werden. Schmutzige Umgebungsbedingungen liegen beispielsweise bei Müllverbrennungsanlagen oder Kokslöschanlagen vor, so dass Schmutz an das Objektiv der Kamera gelangt. Aus diesem Grunde wird bei den zurzeit auf dem Markt befindlichen Systemen die Luft über einen beweglichen Luftschlauch zu der Kamera geführt. Ebenso muss die Stromversorgung und das Sensorsignal über eine bewegliche Leitungs- bzw. Kabelverbindung zu der Sensorik geführt werden. Luftschlauch und Kabel sind somit dauerhaft einer höheren Umgebungstemperatur ausgesetzt. Darüber hinaus sind diese Leitungen, Kabel bzw. Schlauchverbindungen mechanisch sehr aufwendig ausgeführt, damit sie für einen Dauerbetrieb über Jahre hinweg störungsfrei funktionieren.

Nachteilig hierbei ist, dass schlechte Erfahrungen hinsichtlich des Kamera-Bewegungsantriebes gemacht wurden, da die mechanische und thermische Belastung des Messsystems für den Dauerbetrieb über Jahre hinweg zu hoch ist. Dies ergibt sich auch dadurch, dass die außen liegenden Kabel bzw. Schläuche mitbewegt werden müssen. An den außen liegenden Kabeln und Luftversorgungsleitungen liegt klimatisch infolge Sommer-/Winterbetrieb und heiße bzw. feuchte Produktionsbedingungen, z.B. bei der Überwachung des Löschvorganges glühender Kohle, heiße Walzen bei der Papierproduktion usw., bedingt, eine hohe Temperaturlast an. Die Luftversorgungsschläuche und Kabel halten eine gewisse Zeit, aber dann kommt es zu Rissen in den Leitungen und die Kamera und deren Antriebsaggregate und Elektronik verschmutzt. Varianten, bei denen die Optik statt mit Luft durch einen an der Sichtfläche der Kamera angebrachten Scheibenwischer sauber gehalten werden, schmieren meist, was zu Sichtproblemen und zur Messwertverfälschung führt. Das Überwachungssystem wird dadurch sehr störanfällig

Des Weiteren ist aus der DE 36 14 277 A1 ein Abtastfeuerüberwachungssystem mit einer Feuerquellenfeststelleinrichtung bekannt, die gekennzeichnet ist durch einen Detektorkopf, der ein kleines Gesichtsfeld aufweist und angepasst ist zum Feststellen von Wärmestrahlungsenergie von einer überwachten Fläche, eine vertikale Abtastantriebseinrichtung, um den Detektorkopf innerhalb eines Feststellbereiches von kleiner Breite auf der Überwachungsfläche abtasten zu lassen, und eine horizontale Abtastantriebseinrichtung zum Befestigen des Detektorkopfes und der genannten vertikalen Abtastantriebseinrichtung darauf und drehbar in horizontaler Richtung; und eine Recheneinheit zum Durchführen eines benötigten Signalverarbeitens und einer Entscheidung auf der Basis eines Feststellsignals von dem Detektorkopf, wobei der Detektorkopf in vertikalen und horizontalen Richtungen angetrieben ist, um über der Gesamtüberwachungsfläche zu tasten. Somit stellt diese Lösung im Prinzip das allgemeine Verfahren in Form eines Abtastfeuerüberwachungssystem dar, wie mittels eines Einpunktsensors (Pyrometer) ein Wärmebild aufgezeichnet werden kann.

Es ist Aufgabe der Erfindung, ein Verfahren zur Erfassung von Wärmestrahlung der eingangs genannten Art zu schaffen, mit dem eine kontinuierliche Darstellung eines ortsveränderlichen Infrarotbildes in Echtzeit erfolgen kann, wodurch thermische Veränderungen im überwachten Raum, wie Brandherde, besser erkannt und interpretiert werden können. Mit der Einrichtung sollen darüber hinaus alle umweltsensitiven Elemente, wie Elektronik, Sensorik, Kabel usw., vor extremer Temperaturbelastung und vor aggressiven Medien geschützt und mechanische Belastungen vermindert werden.

Der Erfindung liegt die Erkenntnis zu Grunde, dass die Echtzeitsynchronisation von Kameraposition und Echtzeitthermobild eine kontinuierliche Darstellung des Thermobildes ortsgenau und kamerasynchron ermöglicht, so dass der Anwender sofort eine thermische Veränderung, beispielsweise einen Brand, direkt in Echtzeit erkennen und räumlich zuordnen kann, und dass eine übermäßige Temperatur- und Schmutzbelastung die Funktion einer thermische Kamera nachhaltig schädigt oder zerstört, eine dauernde Luftumströmung der thermischen Geräteeinheit jedoch diese Nachteile beseitigt.

Die Erfindung geht aus von einem Verfahren und einer Einrichtung zur Erfassung von großflächigen Thermobildern mit Thermokameras auf einem Monitor, insbesondere zur Temperaturmessung in thermischen Produktionsprozessen nach den Oberbegriffen der Ansprüche 1 und 10.

Die Aufgabe wird dadurch gelöst, dass eine Echtzeitsynchronisation der Kameraposition und dem Echtzeitthermobild durch absolute Synchronisation des Kameraantriebs mit dem Kamerasignal erfolgt, wobei sich die Kamera in Echtzeit entsprechend der eingestellten Scanngeschwindigkeit geometrisch real über den zu erfassenden Raum bewegt und die gescannten Einzelbilder auf dem Monitor zu einem Gesamtthermobild aneinander gefügt werden und damit das Gesamtthermobild fortlaufend aktualisiert wird.

Gemäß einer weiteren Ausgestaltung des erfindungsgemäßen Verfahrens ist vorgesehen, dass die jeweils aktuelle Position der Kamera in der Darstellung auf dem Monitor durch die Einzelbilder trennende Balken im Gesamtthermobild begrenzt wird.

Bei der Erfassung von großflächigen Thermobildern mit Thermokameras ist deren erfassbare Bildgröße begrenzt durch die Bildauflösung der Kamera in Kombination mit der verwendeten Optik. Durch dieses Verfahren ermöglicht die Echtzeitsynchronisation von Kameraposition und Echtzeitthermobild eine kontinuierliche Darstellung des Thermobildes ortsgenau und kamerasynchron, so dass der Anwender sofort eine thermische Veränderung, z.B. einen Brand, direkt in Echtzeit erkennen und räumlich zuordnen kann. Maßgeblich hierfür ist die absolute Synchronisation des Kameraantriebs mit dem Kamerasignal. Dieses Verfahren sichert ein positionsgetreues Abbild unabhängig von der Rechnerleistung eines Bildverarbeitungscomputers und der Scanngeschwindigkeit der Kameraverfahreinrichtung.

Dieses Verfahren bringt eine Reihe von Vorteilen gegenüber dem Stand der Technik mit sich. Durch den hochpräzisen synchronisierten Bildaufbau erscheint des Gesamtthermobild nicht wie ein zusammengesetztes Bild aus verschiedenen Einzelaufnahmen, sondern als wäre dieses direkt als Gesamtbild aufgezeichnet worden. Gerade in der Brandmeldetechnik sind Darstellungsweisen in Echtzeit für den vorbeugenden Brandschutz von erheblichem Vorteil.

Das Verfahren ersetzt bei großflächigen Aufnahmen die Verwendung von mehreren Einzelkameras. Weiterhin vereinfacht dieses Verfahren zusammen mit der diesbezüglichen erfindungsgemäßen Einrichtung erheblich die Verwendung des Wärmeerfassungssystems in explosionsgefährdeten Bereichen, da durch einen dauerhaft hergestellten Überdruck durch die zentrale Luftführung des Systems keine brennbaren Gase mit der Elektronik in Verbindung kommen können.

Durch die Synchronisation von Kameraposition und Thermobild kann eine Echtzeitbetrachtung fast unabhängig von der Scanngeschwindigkeit realisiert werden.

Weitere Ausgestaltungen des erfindungsgemäßen Verfahrens ergeben sich aus den Ansprüchen 2 bis 9, deren Merkmale nachfolgend in Bezug auf eine mit dem erfindungsgemäßen Verfahren betriebene Einrichtung erläutert werden.

Dem die Kamera aufnehmenden schwenkbeweglichen Gehäuse ist ein feststehendes Basisgehäuse zugeordnet, in welches Stromversorgungs- und Signalkabel sowie zumindest ein Luftzuführschlauch münden. Das Basisgehäuse und das die Kamera aufnehmende Gehäuse sind über ein die Stromversorgungs- und Signalkabel und die zugeführte Luftströmung aufnehmendes und als Drehachse dienendes Verbindungsrohr miteinander verbunden.

Das Funktionsprinzip der Geräteeinheit basiert somit darauf, dass die Luft zentral über das komplette System im Inneren der Geräteeinheit geführt und zentral an der Drehachse vom feststehenden Geräteteil, dem Basisgehäuse, zum beweglichen Geräteteil, dem die Kamera aufnehmenden schwenkbeweglichen Gehäuse, übergeben wird. In dem als Drehachse dienenden Verbindungsrohr werden auch die Stromversorgungs- und Signalkabel geführt.

Besonders vorteilhaft ist hierbei, dass die Kabelverbindungen durch die drehachsensymmetrische Aufhängung im Verbindungsrohr zwischen beweglichem Gehäuse und Basisgehäuse,nur leicht verdreht werden und somit beinahe keiner mechanischen Belastung ausgesetzt sind.

Das komplette System einschließlich der Kabel werden durch die zentral gekühlte Luft ständig gekühlt und die Luft wirkt außerdem noch durch das Freiblasen der Optik der Kamera gegen eine Verschmutzung und damit verbundene Funktionsstörung der Sensorik.

Der Einbau der Geräteeinheit in ein Gesamtsystem ergibt somit, dass keine freiliegenden Kabel und Elektronik mehr vorhanden sind. Die gesamte Geräteeinheit ist komplett geschützt und funktioniert in einer extrem rauen und robusten Umgebung, ohne dass die Geräteeinheit teuer oder aufwändig herzustellen ist. Durch die Luft umströmte Kühlung kann sich das Gerätegehäuse problemlos auf etwa 150°C erhitzen.

Somit verfügt dieses Gerät über eine extrem lange Standzeit. Der robuste und wartungsfreie Aufbau der Geräteeinheit ist hervorragend z.B. für die Brandüberwachung in Müllbunkern geeignet. Durch das integrierte Kühl- und Freiblassystem arbeitet die Geräteeinheit auch bei extrem rauen Umgebungen, in denen schmutzpartikelhaltige Dämpfe auftreten.

Somit kommen als Kamera ein Pyrometer, Zeilen-, Infrarot-, Bildkameras oder dergleichen in Betracht.

Weiterhin ist zwischen dem Basisgehäuse und dem die Kamera aufnehmenden schwenkbeweglichen Gehäuse ein Drehlager angeordnet. Dadurch ist das die Kamera aufnehmende Gehäuse in einer horizontalen Ebene um 360° rotierbar, so dass auf Grund dieser Bewegungsmöglichkeit ein Mehrfaches der strahlungsempfindlichen Sensorfläche erfasst werden kann.

Des weiteren kann vorgesehen sein, dass das Drehlager mit einem Kippmechanismus zur Neigung des die Kamera aufnehmenden Gehäuses in einer vertikalen Ebene versehen ist.

Um die Rotations- und Kippbewegung des die Kamera aufnehmenden Gehäuses zu ermöglichen, ist dieses durch ein vorzugsweise in das Basisgehäuse integriertes Antriebselement, vorzugsweise durch einen Mikroprozessor gesteuerter Schrittmotor, steuerbar.

Damit auch die Steuereinheit für das Antriebselement vor extremen Temperaturen, Schmutz und Feuchtigkeit geschützt wird, ist nach einer Weiterbildung der Geräteeinheit die Steuereinheit für das Antriebselement im Basisgehäuse untergebracht.

Schließlich ist am Basisgehäuse mindestens eine Öffnung für die Stromversorgungs- und Signalkabel sowie für den Luftzuführschlauch ausgebildet.

Besonders geeignet sind das erfindungsgemäße Verfahren und die zugehörige Einrichtung zur Brandfrüherkennung von großflächigen Bereichen, beispielsweise in Müllbunker in der Müllverarbeitenden Industrie, z.B. im Bereiche der Entsorgung und von Kraftwerken. Dabei kann eine Überwachung mehrerer Fertigungsstraßen mit nur einem solchen System erfolgen.

Die Erfindung wird in der nachfolgenden Beschreibung anhand eines Ausführungsbeispieles, das in den Zeichnungen dargestellt ist, näher erläutert. Es zeigen:

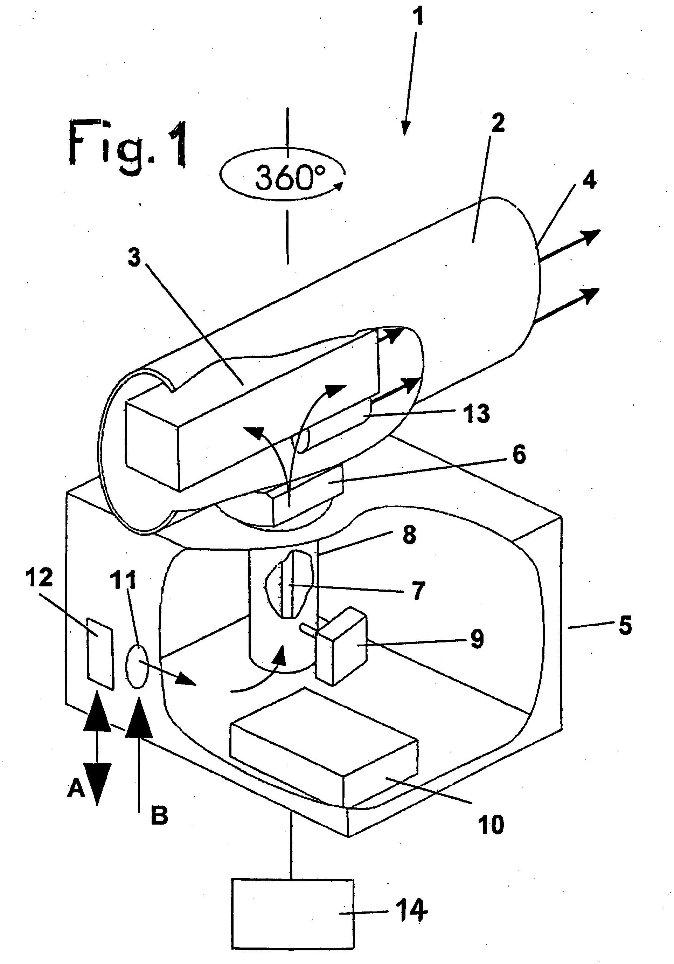

- Fig. 1: eine Einrichtung zur Erfassung von Wärmestrahlung, die nach dem erfindungsgemäßen Verfahren betrieben wird, und

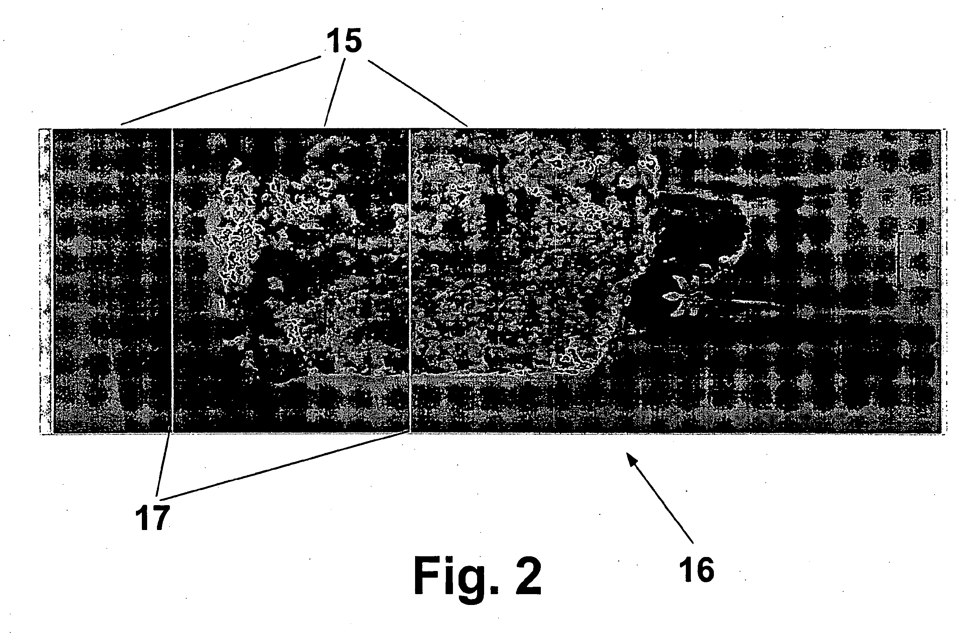

- Fig. 2: eine Darstellung eines aus mehreren Einzelbildern bestehenden Gesamthermobildes eines überwachten Raumes, welches auf einem Monitor angezeigt wird.

Die Einrichtung 1 umfasst zunächst ein um 360° schwenkbewegliches Gehäuse 2, in der eine thermische Kamera 3, z.B. eine Infrarotkamera, eine Zeilenkamera oder ein Pyrometer, untergebracht ist. Das schwenkbare Gehäuse 2 besitzt eine Sichtöffnung 4, über die das Signal eines nicht näher dargestellten Messobjektes auf die Kamera 3 trifft, wie dies durch die fett gezeichneten Pfeile dargestellt ist.

Unterhalb des die Kamera 3 aufnehmenden schwenkbeweglichen Gehäuses 2 befindet sich ein feststehendes Basisgehäuse 5, das mittels eines Drehlagers 6 rotierbar mit dem die Kamera 3 aufnehmenden schwenkbeweglichen Gehäuses 2 in Wirkverbindung steht.

Nur teilweise gezeichnete elektrische Versorgungs- und Signalleitungen bzw. -kabel 7, schematisch als Pfeil A dargestellt, sind im Inneren des Gehäuses 2 derart verlegt, dass sie so nah wie möglich entlang der Drehachse im Mittelpunkt des Drehlagers 6 über ein Verbindungsrohr 8 in den Innenraum des Basisgehäuses 5 gelangen. Der Abstand zwischen dem Verbindungsrohr 8 und der Bodenplatte des Basisgehäuses 5 ist derart ausgeführt, dass die Datenübertragungs- bzw. Versorgungs- und Signalleitungen bzw. -kabel 7 nicht geknickt werden. Das Drehlager 6 ermöglicht eine Drehung des schwenkbeweglichen Gehäuses 2 mit der integrierten thermischen Kamera 3 um bis zu 360°.

Gegebenenfalls kann zusätzlich das Gehäuse 2 durch einen nicht näher gezeigten vertikalen Kippmechanismus, der in das Drehlager 6 integriert werden kann, in seiner horizontalen Neigung verändert werden. Diese vertikale Neigung kann ebenso wie die Drehbewegung des Gehäuses 2 durch ein Antriebselement 9 erfolgen. Eine Möglichkeit, die Rotations- und Kippbewegung des Gehäuses 2 zu erzeugen ist die Verwendung Mikroprozessor gesteuerter Schrittmotoren, die eine exakte Position ansteuern können. Als Antriebselement 9 sind aber auch andere bekannte Antriebe möglich. Eine Steuereinheit 10 für das Antriebselement 9 ist in das Basisgehäuse 5 montiert, um die bewegte Rotationsmasse der Geräteeinheit zu verringern.

Kühlluft für die komplette Einrichtung 1 wird über eine Öffnung 11 für einen Luftzuführschlauch B, schematisch als Pfeil dargestellt, dem Basisgehäuse 5 zugeführt, gelangt dann über das Verbindungsrohr 8 in das die Kamera 3 aufnehmende Gehäuse 2 und verlässt dieses über die Sichtöffnung 4.

Die Datenübertragungs- bzw. Versorgungs- und Signalleitungen bzw. -kabel 7 gelangen von einer im Basisgehäuse 5 befindlichen Öffnung 12 ebenso über das Verbindungsrohr 8 zur Sensorik. Alle beweglichen Leitungen bzw. Kabel 7 befinden sich demnach im Inneren der Geräteeinheit 1.

Die Luft übernimmt somit die Kühlung der Geräteeinheit 1 einschließlich der Versorgungsleitungen bzw. -kabel 7. Gleichzeitig wird sie noch für das Freispülen der Sensoroptik verwendet und verhindert damit ein Verschmutzen der Sensoroptik, das durch Staub und andere Produktionsverschmutzungen verursacht wird. Dadurch ist ein wartungsfreier Dauerbetrieb sichergestellt.

Zur Ortungsunterstützung kann es sinnvoll sein, das eine modifizierte Einrichtung 1 zusätzlich eine Bild gebende Kamera 13 zusätzlich zur Kamera 3 besitzt. Die elektrische Leitungen bzw. -kabel 7 werden in diesem Falle ebenso wie bei der Sensorik durch das Verbindungsrohr 8 geführt.

Des weiteren ist ein Computer mit Monitor 14 zur Darstellung der durch die Kamera 3 erfassten Einzelbilder 15 vorgesehen, der die entsprechenden Signale über eine Signalleitung 7 erhält. Die Einzelbilder 15 bilden ein Gesamtthermobild 16, wobei die Einzelbilder 15 computergesteuert durch senkrechte Balken 17, die für den Betrachter als kaum sichtbar empfunden werden, voneinander getrennt sind.

### Bezugszeichenliste

- 1: Einrichtung
- 2: Schwenkbewegliches Gehäuse
- 3: Thermische Kamera
- 4: Sichtöffnung
- 5: Basisgehäuse
- 6: Drehlager
- 7: Versorgungs- und Signalleitungen bzw. -kabel
- 8: Verbindungsrohr
- 9: Antriebselement
- 10: Steuereinheit
- 11: Öffnung
- 12: Öffnung
- 13: Bild gebende Kamera
- 14: Monitor
- 15: Einzelbild
- 16: Gesamtthermobild
- 17: Balken

## Patentansprüche

1. Verfahren zur Erfassung von großflächigen Thermobildern mit Thermokameras auf einem Monitor (14), insbesondere zur Temperaturmessung in thermischen Produktionsprozessen, mit einer in einem schwenkbeweglichen Gehäuse (2) befindlichen thermischen Kamera (3) und einer Lüftungseinrichtung, und mit einem feststehenden Basisgehäuse (5), in welches Stromversorgungs- und Signalleitungen bzw. -kabel (7) sowie zumindest ein Luftzuführschlauch (B) münden, wobei das Basisgehäuse (5) und das die Kamera (3) aufnehmende Gehäuse (2) über ein die Stromversorgungs- und Signalleitungen bzw. -kabel (7) und die zugeführte Luftströmung aufnehmendes und als Drehachse dienendes Verbindungsrohr (8) miteinander verbunden sind, **dadurch gekennzeichnet, dass** eine Echtzeitsynchronisation der Kameraposition und dem Echtzeitthermobild durch absolute Synchronisation des Kameraantriebs mit dem Kamerasignal erfolgt, wobei sich die Kamera (3) in Echtzeit entsprechend der eingestellten Scanngeschwindigkeit geometrisch real über den zu erfassenden Raum bewegt und die gescannten Einzelbilder (15) auf dem Monitor (14) zu einem Gesamtthermobild (16) aneinander gefügt werden und damit das Gesamtthermobild (16) fortlaufend aktualisiert wird.

2. Verfahren nach Anspruch 1, **dadurch gekennzeichnet, dass** die jeweils aktuelle Position der Kamera (3) in der Darstellung auf dem Monitor (14) durch die Einzelbilder (15) trennende Balken (17) im Gesamtthermobild (16) begrenzt wird.

3. Verfahren nach Anspruch 1 oder 2, **dadurch gekennzeichnet, dass** als Kamera (3) vorzugsweise eine Infrarotkamera oder eine Zeilen- oder Bildkamera oder ein Pyrometer verwendet wird.

4. Verfahren einem der Ansprüche 1 bis 3, **dadurch gekennzeichnet, dass** das die Kamera (3) aufnehmende Gehäuse (2) über ein Drehlager (6) gegenüber dem Basisgehäuse (5) verschwenkt wird.

5. Verfahren nach einem der Ansprüche 1 bis 4, **dadurch gekennzeichnet, dass** das die Kamera (3) aufnehmende Gehäuse (2) in einer horizontalen Ebene um 360° rotiert wird.

6. Verfahren nach einem der Ansprüche 1 bis 5, **dadurch gekennzeichnet, dass** das die Kamera (3) aufnehmende Gehäuse (2) über ein mit einem Kippmechanismus versehenes Drehlager (6) in einer vertikalen Ebene geneigt wird.

7. Verfahren nach einem der Ansprüche 1 bis 6, **dadurch gekennzeichnet, dass** die Rotations- und Kippbewegung des die Kamera (3) aufnehmenden Gehäuses (2) durch ein vorzugsweise in das Basisgehäuse (5) integriertes Antriebselement (9), vorzugsweise ein Mikroprozessor gesteuerter Schrittmotor, gesteuert wird.

8. Verfahren nach einem der Ansprüche 1 bis 7, **dadurch gekennzeichnet, dass** die Steuereinheit (10) für das Antriebselement (9) im Basisgehäuse (5) untergebracht ist.

9. Verfahren nach einem der Ansprüche 1 bis 8, **dadurch gekennzeichnet, dass** am Basisgehäuse (5) mindestens eine Öffnung (11,12) vorgesehen ist, durch welche die Stromversorgungs- und Signalleitungen bzw. -kabel (7) sowie der Luftzuführschlauch (B) hindurchführen.

## Claims

1. A method for recording large-surface thermal images with thermal cameras on a monitor (14), in particular for measuring temperature in thermal production processes, with a thermal camera (3) situated in a pivot-mounted casing (2) and a ventilation device, and with a fixed basic housing (5), wherein power supply and signal ducts or cables (7) as well as at least one air supply hose (B) are terminated, whereas the basic housing (5) and the casing (2) accommodating the camera (3) are connected to each other via a connection pipe (8) acting as a rotational axis and accommodating the power supply and signal ducts or cables (7) and the delivered air flow, **characterised in that** the position of the camera is synchronised in real-time via absolute synchronisation of the camera drive system with the camera signal according to the real-time thermal image, wherein the camera (3) moves in real-time according to the set scanning speed geometrically over the space to be recorded and the individual scanned images (15) are displayed in sequence on the monitor (14) to construct the whole thermal image (16) and so that the whole thermal image (16) is updated continuously.

2. A method according to claim 1, **characterised in that** the current position of the camera (3) in the display on the monitor (14) is always limited by beams (17) separating the individual images (15) in the whole thermal image (16).

3. A method according to claim 1 or 2, **characterised in that** an infrared camera or a line-scan or image camera or a pyrometer is used preferably as a camera (3).

4. A method according to one of the claims 1 to 3, **characterised in that** the casing (2) accommodating the camera (3) is pivoted via a roller bearing (6) with respect to the basic housing (5).

5. A method according to one of the claims 1 to 4, **characterised in that** the casing (2) accommodating the camera (3) is rotated on a horizontal plane around 360°.

6. A method according to one of the claims 1 to 5, **characterised in that** the casing (2) accommodating the camera (3) is tilted on a vertical plane via a roller bearing (6) fitted with a tipping mechanism.

7. A method according to one of the claims 1 to 6, **characterised in that** the rotation and tipping movement of the casing (2) accommodating the camera (3) is controlled via preferably a drive element (9) integrated in the basic housing (5), preferably a microprocessor-controlled stepping motor.

8. A method according to one of the claims 1 to 7, **characterised in that** the control unit (10) for the drive element (9) is housed in the basic housing (5).

9. A method according to one of the claims 1 to 8, **characterised in that** at least one opening (11,12) is provided on the basic housing (5), letting through the power supply and signal ducts or cables (7) as well as the air supply hose (B).

## Revendications

1. Procédé de capture d'images thermiques de grande surface à l'aide de caméras thermiques sur un moniteur (14), en particulier pour la mesure de température dans des processus de production thermiques, comprenant une caméra thermique (3) située dans un boîtier (2) mobile en pivotement et un dispositif d'aération ainsi qu'un carter fixe de base (5) dans lequel débouchent des lignes ou bien câbles d'alimentation en courant et de signaux (7) ainsi qu'au moins un tuyau flexible d'amenée d'air (B), ledit carter de base (5) et ledit boîtier (2) de réception de la caméra (3) étant reliés entre eux par un tube de liaison (8) logeant les lignes ou bien câbles d'alimentation en courant et de signaux (7) et le courant amené d'air et servant de pivot, **caractérisé par le fait qu'**une synchronisation en temps réel de la position de la caméra et de l'image thermique temps réel se fait par une synchronisation absolue de l'entraînement de la caméra avec le signal de la caméra, ladite caméra (3) se déplaçant en temps réel, selon la vitesse de balayage réglée, de manière géométriquement réelle sur l'espace à saisir, et, sur le moniteur (14), les images individuelles balayées (15) étant jointes pour former une image thermique générale (16) et, ainsi, l'image thermique générale (16) étant actualisée en continu.

2. Procédé selon la revendication 1, **caractérisé par le fait que** la position respectivement actuelle de la caméra (3), dans la représentation sur le moniteur (14), est délimitée par des barres (17) dans l'image thermique générale (16), qui séparent les images individuelles (15).

3. Procédé selon la revendication 1 ou 2, **caractérisé par le fait que**, en tant que caméra (3), on utilise de préférence une caméra infrarouge ou une caméra linéaire ou caméra d'imagerie ou un pyromètre.

4. Procédé selon l'une quelconque des revendications 1 à 3, **caractérisé par le fait que** le pivotement du boîtier (2) de réception de la caméra (3) par rapport au carter de base (5) se fait par l'intermédiaire d'un palier de pivotement (6).

5. Procédé selon l'une quelconque des revendications 1 à 4, **caractérisé par le fait que** le boîtier (2) de réception de la caméra (3) est tourné de 360° dans un plan horizontal.

6. Procédé selon l'une quelconque des revendications 1 à 5, **caractérisé par le fait que** ledit boîtier (2) de réception de la caméra (3) est incliné dans un plan vertical au moyen d'un palier de pivotement (6) pourvu d'un mécanisme de basculement.

7. Procédé selon l'une quelconque des revendications 1 à 6, **caractérisé par le fait que** le mouvement de rotation et de basculement du boîtier (2) de réception de la caméra (3) est commandé par un élément d'entraînement (8) intégré de préférence au carter de base (5), de préférence par un moteur pas à pas commandé par microprocesseur.

8. Procédé selon l'une quelconque des revendications 1 à 7, **caractérisé par le fait que** l'unité de commande (10) pour ledit élément d'entraînement (9) est logée dans le carter de base (5).

9. Procédé selon l'une quelconque des revendications 1 à 8, **caractérisé par le fait que** sur ledit carter de base (5) est prévue au moins une ouverture (11, 12) par laquelle passent les lignes ou bien câbles d'alimentation en courant et de signaux (7) ainsi que ledit tuyau flexible d'amenée d'air (B).
